# EUROPEAN PATENT SPECIFICATION

(11) **EP 2 716 169 B1**
(45) Date of publication and mention of the grant of the patent: **02.01.2019**
(21) Application number: 12792726.7
(22) Date of filing: 30.05.2012
(51) Int. Cl.: A23L 33/16, A23L 2/02, A23L 2/52, A23L 2/38, A23L 2/56, A23L 2/60

(54) **BEVERAGE COMPOSITION**
GETRÄNKEZUSAMMENSETZUNG
COMPOSITION DE BOISSON

(30) Priority: 31.05.2011 JP 2011121186; 22.12.2011 JP 2011281817
(43) Date of publication of application: 09.04.2014
(73) Proprietor: Suntory Holdings Limited, Kita-ku, Osaka-shi Osaka 530-8203 (JP)
(72) Inventor: IGARASHI, Masanori, Kawasaki-shi Kanagawa 211-0067 (JP)
(74) Representative: Vossius & Partner Patentanwälte Rechtsanwälte mbB
(86) International application number: PCT/JP2012/063851
(87) International publication number: WO 2012/165452

(56) References cited:
- EP-A1- 0 587 972
- EP-A1- 2 082 651
- WO-A1-01/01799
- WO-A1-2007/143660
- WO-A1-2011/074995
- WO-A2-2006/060818
- CN-A- 101 534 663
- JP-A- 2003 137 788
- JP-A- 2004 123 642
- JP-A- 2005 058 208
- JP-A- 2005 160 368
- JP-A- 2006 515 510
- JP-A- 2008 178 400
- US-A1- 2003 143 311
- US-A1- 2003 143 311
- US-A1- 2009 148 566
- US-A1- 2010 196 549
- US-A1- 2010 196 577
- US-B1- 7 311 932

## Description

### TECHNICAL FIELD

The present invention relates to drinks intended for purposes such as smooth hydration. In particular, the invention relates to drinks that are improved in terms of factors that are derived from electrolytes such as K⁺, Ca²⁺, Mg²⁺, and Cl⁻, such as sliminess, bitterness, stimulus to the oral mucous membrane, and peculiar aftertaste.

### BACKGROUND ART

There are available in the market many packaged electrolyte drinks (sports drinks) having controlled osmolality, electrolyte concentration, and sugar concentration for the purpose of replenishing water and electrolytes lost through exercise or strenuous activities.

For example, Patent Document 1 provides a non-alcoholic beverage particularly for use as a sports drink by participants in endurance sports or activities, more specifically, a sports drink comprising an aqueous solution including: a saccharide selected from galactose, galactose containing disaccharide and oligosaccharide, and mixtures thereof, 25 to 45 mmol/L of sodium, and optionally not more than 2.5% (w/v) of glucose, wherein the sports drink has a total monosaccharide concentration of 0.5 to 5.0% (w/v) and a total solution osmolality of 150 to 240 mOsm/kg.

Patent Document 2 provides an electrolyte drink composition that can simultaneously and effectively provide rapid water and electrolyte replenishment and sufficient energy supply when used as a peroral fluid replacement and a sports drink, more specifically a formulation comprising 40 to 100g/L of cluster cyclodextrin as a glucide, and 30 to 65 mEq/L of sodium ion, 15 to 25 mEq/L of potassium ion, 25 to 55 mEq/L of chloride ion, 1 to 5 mEq/L of magnesium ion as electrolytes, wherein the formulation has an osmolality of not more than 250 mOsm/L.

Patent Document 3 provides a water and electrolyte replenishing drink that can effectively provide rapid water and electrolyte replenishment when used as a peroral fluid replacement, more specifically a water and electrolyte replenishing drink comprising 30 to 40 mEq/L sodium ion, 15 to 25 mEq/L of potassium ion, 25 to 35 mEq/L of chloride ion, 3 to 7 mEq/L of calcium ion, and 2 to 5 mEq/L of magnesium ion as electrolyte components, wherein the water and electrolyte replenishing drink has a pH of 4.2 to 6.0, a titratable acidity of less than 30, and an osmolality of 160 to 190 mOsm/kg, and wherein the water and electrolyte replenishing drink further comprises sucrose, 15 to 79 mEq/L of citrate ion, and 2 to 10 mEq/L of phosphate ion.

Patent Document 4 provides a solution to fulfill the need for a rehydration beverage that supplies necessary electrolytes and energy sources, exhibits organoleptic properties that are substantially equivalent or superior to those of typical sports drinks, and provides superior rehydration by addressing several mechanisms affecting rehydration, such as fluid retention and voluntary fluid consumption, as well as the need for a method that ameliorates the effects of dehydration, enhances rehydration, and addresses mechanisms such as fluid retention, and urinary loss. More specifically, this document provides a composition comprising: (a) about 4 to about 10% by weight of carbohydrate, based on the total weight of the composition; (b) at least about 30 mEq/L of sodium; (c) at least about 10 mEq/L of chloride; (d) at least about 3 mEq/L of potassium; and (e) water, wherein the osmolality of the composition in solution is in the range from about 250 to 350 mOsm/Kg.

Patent Document 5 provides sport drinks containing 28% fruit juice, 0,010 wt% Sodium, 0,004 wt% Calcium and 0,005 wt% Magnesium.

In general, K⁺, Ca²⁺, Mg²⁺, and Cl⁻ are incorporated in such drinks using those known as the Designated Food Additives, which are highly purified.

### CITATION LIST

### PATENT DOCUMENTS

Patent Document 1: Japanese Patent No. 3059485 (Japanese Patent Domestic Publication No. H09-508804)
Patent Document 2: Japanese Unexamined Patent Application Publication No. 2004-123642
Patent Document 3: Japanese Unexamined Patent Application Publication No. 2006-304775
Patent Document 4: Japanese Unexamined Patent Application Publication No. 2007-510758
Patent Document 5: European Patent Application No. EP 0587972

### SUMMARY OF INVENTION

### TECHNICAL PROBLEM

While various formulations for water replenishment of the body have been studied, factors such as the transportation of electrolytes to the body (from the lumen into cells) and the water absorption rate in the stomach and small intestine have also been studied.

Conventional sports drinks, which are intended for replenishing water and electrolytes lost through sweating during exercise or strenuous activities as well as for replenishing energy source for maintaining biological functions, are rich in salt (electrolyte) and sugar and hence, when consumed, they have posed various problems derived from electrolytes, such as sliminess or bitterness, stimulus to the oral mucous membrane, and peculiar aftertaste. Another problem that has occurred is the following: such uncomfortable feelings encountered upon consumption were perceived in a different way when these drinks were consumed after sweating in relatively light exercise or activities of daily living, and hence they could not be consumed comfortably without preliminary dilution. Further, an effort was made to study the receptivity of saltiness during exercise, but no formulation has been designed that was contemplated for use in daily life.

An object of the present invention is to provide a drink that can not only rapidly replenish water and electrolytes lost through sweating but also can be consumed comfortably during relatively light exercise or activities of daily living.

### SOLUTION TO PROBLEM

The present inventors have made various studies on the components incorporated in conventional sports drinks, and as a result have found that electrolytes other than sodium chloride which are incorporated in the form of the Designated Food Additives cause the following problems derived from the electrolytes: sliminess, bitterness, stimulus to the oral mucous membrane, and peculiar aftertaste. As a result of extensive investigations, the inventors have also found that those who, in their daily life, continuously and repeatedly take drinks having other electrolytes than sodium chloride incorporated in the form of not the Designated Food Additives but familiar natural materials which have been consumed for a long time find that the drinks satisfy the needs to feel reassured and stay healthy as well as have reduced the problems derived from the electrolytes, such as sliminess, bitterness, stimulus to the oral mucous membrane, and peculiar aftertaste; thus, the inventors completed the invention.

Further, the inventors have found that if any drink composition having electrolytes incorporated in the form of natural materials need be supplemented with other electrolytes, incorporating those additional electrolytes in the form of the Designated Food Additives having a buffering action yields a drink composition that can be consumed comfortably.

Still further, the inventors have found that even in the case of incorporating all electrolytes in the form of natural materials, controlling the amounts of Ca²⁺ and Mg²⁺ to fall below the specified ones reduces the taste peculiar to the electrolytes.

The present invention provides, but is not limited to; the following:
(1) A drink composition having a Na⁺ concentration of 20 to 80 mg/100 mL, an osmolality of 100 to 400 mOsm/kg, a Na⁺:glucose ratio (molar ratio) of 1:0.1 to 1:10, and a Na⁺:K⁺ ratio (molar ratio) of 1:0.05 to 1:1, wherein the drink composition is not supplemented with an electrolyte in the form of a Designated Food Additive having substantially no buffering action.
(2) The drink composition according to (1), wherein the electrolyte is potassium chloride, calcium chloride, magnesium chloride or a mixture thereof.
(3) The drink composition according to (1) or (2), wherein the Ca²⁺ concentration is less than 2 mg/100 mL.
(4) The drink composition according to any one of (1) to (3), wherein the Mg²⁺ concentration is less than 2 mg/100 mL.
(5) The drink composition according to any one of (1) to (4), comprising:
   (i) 0.01 to 30% of a fruit juice;
   (ii) 0.01 to 10% of a natural sweetener;
   (iii) 0.005 to 0.2% of common salt; and
   (iv) 0.005 to 1% of a natural umami and kokumi source selected from the group consisting of: algae extract, dried fish extract, mushroom extract, cereal extract, vegetable extract, fruit extract, herbal extract, mesophyll extract, bean extract, nut extract, yeast extract, sap, sugarcane squeeze (brown sugar syrup) and sugar (soft yellow sugar, brown sugar).
(6) The drink composition according to any one of (1) to (5), wherein the drink composition is packaged and sterilized.
(7) The drink composition according to (5), wherein the fruit juice includes a citrus fruit-derived juice.
(8) The drink composition according to any one of (1) to (7), wherein the drink composition is not supplemented with a Designated Food Additive and/or an Existing Food Additive.
(9) A method for preparing a drink composition having a Na⁺ concentration of 20 to 80 mg/100 mL, an osmolality of 100 to 400 mOsm/kg, a Na⁺:glucose ratio (molar ratio) of 1:0.1 to 1:10, and a Na⁺:K⁺ ratio (molar ratio) of 1:0.05 to 1:1, comprising a step of mixing:
   (i) 0.01 to 30% of a fruit juice;
   (ii) 0.01 to 10% of a natural sweetener;
   (iii) 0.005 to 0.2% of common salt; and
   (iv) 0.005 to 1% of a natural umami and kokumi source selected from the group consisting of: algae extract, dried fish extract, mushroom extract, cereal extract, vegetable extract, fruit extract, herbal extract, mesophyll extract, bean extract, nut extract, yeast extract, sap, sugarcane squeeze (brown sugar syrup) and sugar (soft yellow sugar, brown sugar).
(10) The method according to (9), which involves no supplementation with an electrolyte in the form of a Designated Food Additive having substantially no buffering action.
(11) A method for replenishing human with water and/or electrolyte, comprising a step of orally dosing the drink composition according to any one of (1) to (8).
(12) The method according to (11), comprising dosing the drink composition at 100 mL to 1000 mL/day.
(13) A method for enhancing palatability of a drink composition, comprising mixing the following components to form a drink composition having a Na⁺ concentration of 20 to 80 mg/100 mL, an osmolality of 100 to 400 mOsm/kg, a Na⁺:glucose ratio (molar ratio) of 1:0.1 to 1:10, and a Na⁺:K⁺ ratio (molar ratio) of 1:0.05 to 1:1:
   (i) 0.01 to 30% of a fruit juice;
   (ii) 0.01 to 10% of a natural sweetener;
   (iii) 0.005 to 0.2% of common salt; and
   (iv) 0.005 to 1% of a natural umami and kokumi source selected from the group consisting of: algae extract, dried fish extract, mushroom extract, cereal extract, vegetable extract, fruit extract, herbal extract, mesophyll extract, bean extract, nut extract, yeast extract, sap, sugarcane squeeze (brown sugar syrup) and sugar (soft yellow sugar, brown sugar).
(14) The method according to (13), which involves no supplementation with an electrolyte in the form of a Designated Food Additive having substantially no buffering action.

### ADVANTAGEOUS EFFECTS OF INVENTION

The drink composition of this invention uses natural materials, in other words uses the materials almost in their natural form, and thus has palatability inherent in the materials.

According to the present invention, the drink composition can be consumed comfortably to replenish water and electrolytes upon sweating in relatively light exercise or activities of daily living because consumers will not perceive the taste peculiar to electrolytes such as sliminess, bitterness, a stimulating taste to the oral mucous membrane, or peculiar aftertaste.

### DESCRIPTION OF EMBODIMENTS

### [Formulation of the drink composition]

The drink composition of this invention comprises Na⁺, K⁺ and glucose, and has an effective osmolality for water replenishment.

The drink composition of this invention has a Na⁺ concentration of 20 to 80 mg/100 mL, preferably 25 to 60 mg/100 mL, and more preferably 30 to 50 mg/100 mL. Any Na⁺ concentrations lower than the above are inadequate for replenishing the water and electrolytes lost through sweating, while any concentrations higher than the above may give the resultant drink composition a taste not suitable for daily drinking.

As used herein, unless otherwise specified, the concentration values of the respective components of the inventive drink composition (which are typically represented in mg/100 mL and %) are based on the weights of the respective components per unit volume of the drink.

The drink composition of this invention has an osmolality so designed as to be approximately isotonic. More specifically, the drink composition of this invention has an osmolality of 100 to 400 mOsm/kg, preferably 200 to 380 mOsm/kg, more preferably 200 to 350 mOsm/kg, even more preferably 220 to 350 mOsm/kg, still more preferably 240 to 330 mOsm/kg, yet more preferably 270 to 320 mOsm/kg, and most preferably 270 to 310 mOsm/kg. Osmolality can affect the gastric emptying rate and the transportation of water in the small intestine. Normal body fluid osmolality is about 280 to 290 mOsm/kg, but it is known that osmolality is preferably comparable to that of the body fluid in order to ensure that water is effectively absorbed from the alimentary canal. It is recommended that oral rehydration salts (ORS) should have an osmolality of 200 to 310 mOsm/kg (A new reduced osmolarity formulation. Geneve, Switzerland: World Health Organization, 2002). "Normal Saline" (0.9 W/V% sodium chloride in water), which is a Japanese Pharmacopoeia Prescription Drug used in medical care as a base of an electrolyte solution for infusion at an extracellular fluid loss or a Na⁺ loss, has an osmolality of about 310 mOsm/kg.

As referred to in the drink composition of this invention, unless otherwise specified, "glucose" is used in consideration of not only glucose as a monosaccharide but also any glucose that can be produced from disaccharides, oligosaccharides and polysaccharides through digestion in the body. In other words, as used herein, unless otherwise specified, the glucose amount in the drink composition (including all values concerning the glucose amount, such as ratios of glucose to other components) is indicated as the total glucose amount resulting from combining the amount of glucose itself with that of the glucose that can be produced from disaccharides, oligosaccharides and polysaccharides through digestion in the body (this amount may also be described as the glucose amount that is presumably present in the small intestine).

The drink composition of this invention has a Na⁺:glucose ratio so designed as to be suitable for the Na⁺ absorption route and Na⁺ absorption. More specifically, the drink composition of this invention has a Na⁺:glucose ratio (molar ratio) of 1:0.1 to 1:10, preferably 1:0.3 to 1:3, and more preferably 1:0.5 to 1:1.5. The Na⁺:glucose ratio can affect the rate of Na⁺ absorption in the small intestine (which is almost equivalent to the rate of water absorption in the small intestine). In the small intestine, Na⁺ together with glucose is absorbed in cells via the Na⁺/glucose cotransport system. In addition to the absorption of Na⁺ from the intestine, water is also absorbed therefrom. Thus, glucose-containing drinks can achieve more rapid absorption of Na⁺ and water. Glucose and Na⁺ are most easily absorbed at a ratio of 1:1; and the ORS recommended by WHO and unicef is designed to have a glucose:Na⁺ ratio of 1:1.

As used herein, unless otherwise specified, the ratios of components in the drink composition are presented on the basis of the number of moles.

The drink composition of this invention has a Na⁺:K⁺ ratio so designed as to be suitable for replenishing electrolytes lost through sweating on a daily basis. More specifically, the drink composition of this invention has a Na⁺:K⁺ ratio (molar ratio) of 1:0.05 to 1:1, preferably 1:0.05 to 1:0.5, more preferably 1:0.1 to 1:0.25, and even more preferably 1:0.15 to 1:0.2. In general, the higher the sweat rate is, the more Na⁺ is excreted because reabsorption of Na⁺ in sweat glands does not keep pace with sweat secretion. In contrast, during sweating on a daily basis, the ratio of excreted Na⁺ to excreted K⁺ increases. The Na⁺:K⁺ ratio (molar ratio) is typically 1:0.09 to 1:0.14 for sweat secreted during exercise and 1:0.17 for that secreted on a daily basis.

One of the characteristics the inventive drink composition has is that the electrolyte recipe for the above-mentioned drink composition is designed without using the "Designated Food Additives" specified by the Minister of Health, Labor and Welfare in accordance with Article 10 of the Japanese Food Sanitation Law and listed in Appended Table 1 of the Food Sanitation Law Enforcement Regulation. As explained below, the drink composition of this invention can deliver enhanced palatability, in particular, improvements on the following problems derived electrolytes: sliminess, bitterness, intraoral stimulus and bad aftertaste.

### [Natural materials]

The drink composition of the present invention contains fruit juice in an amount of 0.01 to 30%, preferably 0.01 to 20%, and more preferably 0.01 to 10% both as a source of electrolytes and/or glucose and for the purpose of osmolality adjustment. The fruit juice that can be used in this invention can be obtained from a fruit selected from the group consisting of the following members.

Citrus fruits such as lemon, grapefruit (white, ruby), lime, oranges (navel orange, Valencia orange), Satsuma orange, tangor, Natsudaidai orange, Kawanonatsudaidai orange, Hassaku orange, Tamurana orange, Hirami lemon, Sudachi, Yuzu, Kabosu, Daidai orange, Iyokan orange, Ponkan orange, kumquat, Sanbokan sour orange, oroblanco, and pomelo;
stone fruits such as apricot, cherry, Japanese apricot, plums (Japanese plum, prune), and peaches (peach, nectarine, yellow peach);
berries such as grapes (Muscat, Riesling, Delaware, gigantic peak, Pione); and
other fruits such as strawberry, blackberry, blueberry, raspberry, gooseberry, cranberry, pomegranate, apple, pears (Japanese pear, Chinese pear, European pear) Chinese quince, kiwi fruit, pineapple, passion fruit, acerola, litchi, melon, watermelon, chocolate vine, atemoya, avocado, fig, olive, persimmon, horned melon, guava, silverberry, coconut, starfruit, tangelo, cherimoya, durian, jujube, date palm, blue-berried honeysuckle, papaya, pitaya, loquat, longan, white sapote, Oriental Melon, Cydonia oblonga, mango, mangosteen, bayberry, Krantz aloe, and aloe vera.

In the drink composition of this invention, the fruit juices may be used alone or in combination. Any other fruits than those listed above can be used as long as they are commonly used for fruit juice production.

In particular, fruit juices having refreshingness, ease of drinking and a pleasant aftertaste, as well as good compatibility with the taste derived from Na⁺ and K⁺ can be suitably used in the drink of this invention. Fruits that are preferably used in the inventive drink composition from this viewpoint are citrus fruits, in particular, grapefruit (white, ruby), lemon, lime, oranges (navel orange, Valencia orange), Natsudaidai orange, Kawanonatsudaidai orange, Hassaku orange, Tamurana orange, Hirami lemon, Sudachi, Yuzu, and Kabosu.

The drink composition of this invention contains a natural sweetener in an amount of 0.01 to 10%, preferably 0.1 to 10%, and more preferably 1 to 10% in order to deliver sweetness and/or as a source of glucose as well as for the purpose of osmolality adjustment. The drink composition of this invention can use any sweetener selected from the group consisting of the following members.

Natural sweeteners: fructose, glucose, maltose, sucrose, high-fructose syrup, fructose-glucose syrup, glucose-fructose syrup, sugar alcohol, oligosaccharide, honey, sugarcane squeeze (brown sugar syrup), sugars (e.g., saccharose, soft yellow sugar, brown sugar, Wasanbon), maple syrup, molasses, starch syrup, stevia powder, stevia extract, Lo Han Kuo powder, Lo Han Kuo extract, licorice powder, licorice extract, Thaumatococcus daniellii seed powder, and Thaumatococcus daniellii seed extract.

In the drink composition of this invention, the natural sweeteners may be used alone or in combination. Any other natural sweeteners than those listed above can be used as long as they are commonly used.

In particular, in the inventive drink composition, fructose, glucose, maltose, sucrose and honey can be suitably used from the viewpoint of supplying glucose or adjusting osmolality while delivering high-quality sweetness, and a sugarcane squeeze (brown sugar syrup), sugars (preferably soft yellow sugar, brown sugar), and maple syrup can be suitably used from the viewpoints of supplying glucose and highly effectively reducing the peculiarities to electrolytes. A sugarcane squeeze (brown sugar syrup), sugars (preferably soft yellow sugar, brown sugar), and maple syrup can be suitably used from the viewpoint of masking the unpleasant feelings derived from electrolytes. The exclusive use of a natural sweetener allows for masking of the unpleasant feelings derived from electrolytes and therefore reduces the total amount of sweetener to be used in the inventive drink. This in turn yields a drink composition having moderate sweetness, refreshingness, ease of drinking, and natural taste. Particularly preferred natural sweeteners for use in the inventive drink composition are fructose, glucose, maltose, sucrose, honey, sugars (preferably, saccharose, soft yellow sugar, brown sugar), sugarcane squeeze (brown sugar syrup) and maple syrup.

The drink composition of this invention contains a natural umami and kokumi source in an amount of 0.005 to 1%, preferably 0.01 to 0.2%, and more preferably 0.02 to 0.1% both for the purpose of delivering umami and kokumi and/or as a source of electrolytes. The drink composition of this invention can use any natural umami and kokumi sources selected from the group consisting of the following members.

Natural umami and kokumi sources: extracts from alagae (brown algae, red algae, green algae; more specifically, sea tangle, green laver, rock laver, wakame, Tengusa, Hijikia, rigid hornwort, Mozuku, dulse, Ibonori, fucus, false carrageen, Tosakamodoki, Dabiria, etc.), extracts from dried fish (dried bonito, dried mackerel, dried scad, dried round herring, dried saury, dried tuna), extracts from mushrooms (Shiitake, hackberry, Jew's-ear, Shimeji, golden oyster mushroom, predaceous diving beetle, oyster mushroom, king oyster mushroom, hen-of-the-woods, white mushroom, Matsutake mushroom, etc.), extracts from cereals (rice (including unpolished rice, polished rice with embryo, thirty percent polished rice, half polished rice, seventy percent polished rice, polished rice), corn, wheats, pearl barley, millet, foxtail millet, barnyard millet, buckwheat, etc.), vegetable extracts, fruit extracts, herbal extracts, mesophyll extracts, bean extracts, nut extracts, yeast extracts, sap, sugarcane squeeze (brown sugar syrup), and sugars (soft yellow sugar, brown sugar).

In the drink composition of the present invention, the natural umami and kokumi sources may be used alone or in combination. Any other natural umami and kokumi sources than the above-listed ones can be used as long as they are commonly used.

In particular, in the drink of this invention, algae extracts, cereal extracts, vegetable extracts, and nut extracts can be suitably used from the viewpoints of delivering high-quality umami and being able to serve as a source of electrolytes such as Na⁺, K⁺, Ca²⁺, Mg²⁺, and Cl⁻.

As used in this invention, unless otherwise specified, "algae extracts" refers to extracts obtained by optionally chopping, drying or crushing algae and subjecting them to extraction using a polar solvent (such as water, ethanol or mixture thereof). For example, those extracts which contain 0.5 to 2.0% of Na⁺, 1.0 to 3.5% of K⁺, 0.01 to 0.03% of Ca²⁺, 0.08% or less of Mg²⁺, and about 3% of Cl⁻ are suitably used.

As used in this invention, unless otherwise specified, "vegetable extracts" refers to extracts obtained by optionally chopping, drying or crushing vegetables and subjecting them to extraction using a polar solvent (such as water, ethanol or mixture thereof).

In the drink composition of this invention, a sugarcane squeeze (brown sugar syrup), sugars (brown sugar, soft yellow sugar), and maple syrup can be suitably used from the viewpoints of being suitable as a natural sweetener, being able to serve as a source of electrolytes such as Na⁺, K⁺, Ca²⁺ and Mg²⁺, and delivering high-quality kokumi.

If any glucide that can also be used as a natural sweetener -- for example, sugarcane squeeze (brown sugar syrup), sugars (soft yellow sugar, brown sugar), or maple syrup -- is used in the drink composition of this invention as a natural umami and kokumi source, it is preferred that the total natural sweetener amount including that of the carbohydrate be so adjusted as to satisfy the above-noted range of natural sweetener amount (namely, 0.01 to 10%, preferably 0.1 to 10%, more preferably 1 to 10%).

In a particularly preferred mode of the drink composition of this invention, sea tangle extracts, wakame extracts, sesame extracts, tomato extracts, Krantz aloe extracts, sugarcane squeeze (brown sugar syrup), sugars (brown sugar, soft yellow sugar), and maple syrup can be used as a natural umami and kokumi source.

As a result of further extensive investigations on the drink composition of this invention, the present inventors have found that high contents of Ca²⁺ and Mg²⁺ in a drink composition causes consumers to perceive the taste peculiar to electrolytes even if they are derived from naturally occurring materials. Thus, the drink composition of this invention preferably has the Ca²⁺ and Mg²⁺ contents reduced to less than particular values; specifically, the Ca²⁺ content is preferably less than 2 mg/100 mL, more preferably less than 1.5 mg/100 mL, and even more preferably less than 1.2 mg/100 mL, and the Mg²⁺ content is preferably less than 2 mg/100 mL, more preferably less than 1.5 mg/100 mL, and even more preferably less than 1.2 mg/100 mL.

The drink composition of this invention may use a natural flavoring agent. According to the investigations made by the present inventors, it has been found that a drink using a natural flavoring agent increases in palatability upon continued consumption, as compared with a drink which is different only in the use of a synthetic flavoring agent (a flavoring agent reconstructed using different synthetic flavoring agents based on the result of a gas chromatographic analysis of the natural flavoring agent).

The drink composition of this invention particularly preferably uses a natural flavoring agent that has not been subjected to redistillation and purification for removing terpene hydrocarbons which are poorly water dispersible and easy to deteriorate (undistilled product). This is because purification processes such as redistillation may remove even some of aromatic constituents and slightly volatile components. It is believed that the use of a natural flavoring agent which is an undistilled product allows the original aroma (components and their relative contents) of the natural material to be utilized in a drink composition, contributing to enhancing its palatability.

The natural flavoring agents that can be used in the drink composition of this invention include, but are not limited to, aromatic constituents obtained from aroma-originating materials and aromatic constituents prepared by steam distillation. Examples of the aroma-originating materials include fruits, more specifically, lemon, grapefruit, lime, navel orange, Valencia orange, Satsuma orange, tangor, Natsudaidai orange, Kawanonatsudaidai orange, Hassaku orange, Tamurana orange, Hirami lemon, Sudachi, Yuzu, Kabosu, Daidai orange, Iyokan orange, Ponkan orange, kumquat, Sanbokan sour orange, oroblanco, pomelo, apricot, cherry, Japanese apricot, plums (Japanese plum, prune), peaches (peach, nectarine, yellow peach), grapes (Muscat, Riesling, Delaware, gigantic peak, Pione, strawberry, blackberry, blueberry, raspberry, gooseberry, cranberry, pomegranate, apple, pears (Japanese pear, Chinese pear, European pear), Chinese quince, kiwi fruit, pineapple, passion fruit, acerola, litchi, melon, watermelon, chocolate vine, atemoya, avocado, fig, olive, persimmon, horned melon, guava, silverberry, coconut, starfruit, tangelo, cherimoya, durian, jujube, date palm, blue-berried honeysuckle, papaya, pitaya, loquat, longan, white sapote, Oriental Melon, Cydonia oblonga, mango, mangosteen, bayberry, Krantz aloe, and aloe vera. Fruit peels alone may also be used as an aroma-originating material. Other examples of the aroma-originating materials include coffee, cocoa, cacao, vanilla, teas (including unfermented tea, semi-fermented tea, and fermented tea), and herbs.

The drink composition of this invention is not supplemented with an electrolyte in the form of a Designated Food Additive having substantially no buffering action. Examples of the Designated Food Additive having substantially no buffering action, with which the inventive drink composition is not supplemented, include, but are not limited to, potassium chloride, calcium chloride, magnesium chloride and a mixture thereof.

The drink composition of this invention can use an electrolyte in the form of a Designated Food Additive having a buffering action. As used herein, "Designated Food Additive having a buffering action" refers to a Designated Food Additive having a neutral to weakly alkaline pH when dissolved in water. Examples of the Designated Food Additive having a buffering action, with which the inventive drink composition may be supplemented, include, but are not limited to, sodium ascorbate, sodium aspartate, sodium citrate, sodium gluconate, sodium glutamate, sodium succinate, sodium acetate, sodium tartrate, sodium hydroxide, sodium bicarbonate, sodium lactate, sodium fumarate, sodium malate, sodium phosphate, potassium citrate, potassium gluconate, potassium malate, potassium tartrate, potassium glutamate, potassium ascorbate, potassium succinate, potassium fumarate, potassium phosphate, potassium sulfate, calcium citrate, calcium gluconate, calcium succinate , calcium acetate, calcium tartrate, calcium lactate, calcium malate, calcium phosphate, calcium lactate, magnesium citrate, magnesium gluconate, magnesium glutamate, magnesium succinate, magnesium acetate, magnesium oxide, magnesium tartrate, magnesium carbonate, magnesium sulfate, and magnesium phosphate.

The drink composition of this invention may be, but preferably is not, supplemented with an Existing Food Additive. "Existing Food Additives" means food additives that are enumerated in the List of Existing Food Additives in accordance with the Japanese Food Sanitation Law. Specific examples of the Existing Food Additives include, but are not limited to, L-asparagine, L-aspartic acid, L-alanine, L-arabinose, L-arginine, alginic acid, itaconic acid, inositol, γ-oryzanol, catechin, caffeine, caramel, D-xylose, quercetin, L-glutamine, cyanocobalamin, cyclodextrin, L-serine, taurine, theobromine, dextran, tocopherol, trehalose, naringin, L-histidine, phytic acid, phytin, ferulic acid, L-proline, pectin, hesperidin, gallic acid, L-rhamnose, L-lysine , D-ribose, and L-leucine.

### [Preparation method and the like for the drink composition]

The drink composition of this invention can be prepared using a conventional method. Those skilled in the art can appropriately design its formulating procedure, sterilization procedure (optional) and packaging conditions.

The drink composition of this invention can be made into a sterilized and packaged drink product, either by performing heat sterilization (e.g., retort sterilization) after packing the drink composition in a container or by sterilizing the drink composition before packing it in a container. For example, the inventive drink composition can be made into a canned drink by packing the drink composition in a can in a specified amount and then performing retort sterilization (e.g., 1.2 mmHg, 121°C, 7 min.), or the drink composition can be made into a drink in PET bottle, carton, glass bottle, can or pouch by, for example, subjecting the drink composition to FP or UHT sterilization for exposing it to 90 to 130°C for a second to several tens of seconds and then packing it in a container in a specified amount. When the drink composition of this invention is made into a packaged drink, either hot packaging or aseptic packaging can be used.

Any containers such as PET bottle, carton, glass bottle, aluminum can, steel can, aluminum pouch, and paper container can be used in this invention as long as they are commonly used in drink compositions.

### [Actions, effects and applications of the drink composition]

The drink composition of the present invention can be suitably consumed to replenish water and electrolytes during sweating in relatively light exercise or activities of daily living. More specifically, the drink composition of this invention is suitable for drinking in order to replenish water and electrolytes before, during or after: (1) resting, (2) period of low metabolic rate (walking at less than 3.5 km/h or under equivalent load conditions), (3) period of moderate metabolic rate (walking at 3.5 to 5.5 km/h or under equivalent load conditions), (4) period of high metabolic rate (walking at 5.5 to 7 km/h or under equivalent load conditions), or (5) period of extremely high metabolic rate (walking or running at more than 7 km/h or under equivalent load conditions), with the drink composition being particularly suitable for drinking to replenish water and electrolytes in the cases of (1) to (3).

The subject that is to consume the drink composition of this invention is not particularly limited, but it is preferably human, and more preferably healthy human.

As described above, the drink composition having a Na⁺ concentration of 20 to 80 mg/100 mL, an osmolality of 100 to 400 mOsm/kg, a Na⁺:glucose ratio (molar ratio) of 1:0.1 to 1:10, and a Na⁺:K⁺ ratio (molar ratio) of 1:0.05 to 1:1 can be enhanced in palatability if (1) 0.01 to 30% of a fruit juice; (2) 0.01 to 10% of a natural sweetener; (3) 0.005 to 0.2% of common salt; and (4) 0.005 to 1% of a specified natural umami and kokumi source are incorporated without using a Designated Food Additive. As referred to herein regarding drinks, unless otherwise specified, "enhanced palatability" includes improvements of the following problems derived from electrolytes: sliminess, bitterness, stimulus to the oral mucous membrane, and bad aftertaste.

By using natural materials, the drink composition prepared according to the present invention is improved in the sliminess, bitterness, stimulus to the oral mucous membrane, and bad aftertaste which are derived from electrolytes, as compared with drinks that use Designated Food Additives. Palatability of drinks of interest can be evaluated as appropriate by those skilled in the art. For example, evaluation can be made by the following procedure: one or more trained panelists, or ordinary volunteers (preferably those who have consumed conventional sports drinks regularly) are asked to actually consume the drink of interest and optionally a commercially available sports drink provided as a control sample and to rate the evaluation items specific to sports drinks (for example, one or more items selected from the group consisting of: ease of drinking, gulpability, refreshingness, umami, natural taste, quick finish, mellowness, aromaticness, fruitiness, strong taste, sweetness, sourness, saltiness, aftertaste, and peculiar taste) typically on a 7-point scale (perceived -- cannot be determined definitely -- not perceived). As for more detailed procedure and criteria for evaluation, reference can be made to Examples of the present specification that follow.

By using natural materials, the drink of this invention is also improved in terms of preferableness as compared to conventional sports drinks. According to the investigations made by the present inventors, it has been found that among the above-noted evaluation items specific to sports drinks, "ease of drinking" and "gulpability" are correlated with preferableness. In order to evaluate whether the drink of interest is preferable as a sports drink, the following procedure can be typically used: one or more trained panelists, or ordinary volunteers (preferably those who have consumed conventional sports drinks regularly) are asked to actually consume the drink of interest and optionally a commercially available sports drink provided as a control sample and to rate "ease of drinking" and "gulpability" typically on a 7-point scale (perceived -- cannot be determined definitely -- not perceived). As for more detailed procedure and criteria for evaluation, reference can be made to Examples of the present specification that follow.

### EXAMPLES

### Test 1: Drink composition prepared without using Designated Food Additives as electrolytes

### 1. Preparation of a drink composition

**[Table 1]**

| Raw material | Relative proportion |
|---|---|
| Grapefruit juice | 6% |
| Lemon juice | 1% |
| Fructose | 4% |
| Honey | 0.2% |
| Common salt | 0.1% |
| Sea tangle extract | 0.05% |
| Brown sugar syrup | 0.04% |
| Krantz aloe extract | 0.01% |
| Tomato extract | 0.01% |
| Black sesame extract | 0.01% |
| Peel extract | 0.01% |
| Grapefruit flavoring agent | 0.2% |

The drink composition was prepared by appropriately mixing the respective raw materials in the relative proportions given in the table above, sterilizing the mixture at 95°C for 30 seconds, and then packing it in a 500 mL PET bottle. The prepared drink composition was confirmed to have a Na⁺ concentration of 40 mg/100 mL, an osmolality of 310 mOsm/kg, a Na⁺:glucose ratio of 1:1, and a Na⁺:K⁺ ratio of 1:0.17.

A commercially available sports drink (Na⁺ concentration: 49 mg/mL; osmolality: 370 mOsm/kg; Na⁺:glucose=1:8.5; Na⁺:K⁺=1:0.24; raw materials: sugar, glucose-fructose syrup, fruit juice, glucose, common salt, acidifier, potassium chloride, calcium lactate, seasoning (amino acids), magnesium chloride, flavoring agent, antioxidant (vitamin C)) was also subjected to the sensory evaluation described below. The commercially available product was supplemented with potassium chloride and magnesium chloride as electrolytes in the form of Designated Food Additives having substantially no buffering action, as well as with calcium lactate and vitamin C in the form of Designated Food Additives.

### 2. Sensory evaluation for the drink composition

A total of 180 male and female volunteers aged 25 to 49 years were asked to consume the drink of interest and rate the respective evaluation items on a 7-point scale (7: perceived, 4: cannot be determined definitely, 1: not perceived).

The results are shown in Table 2.

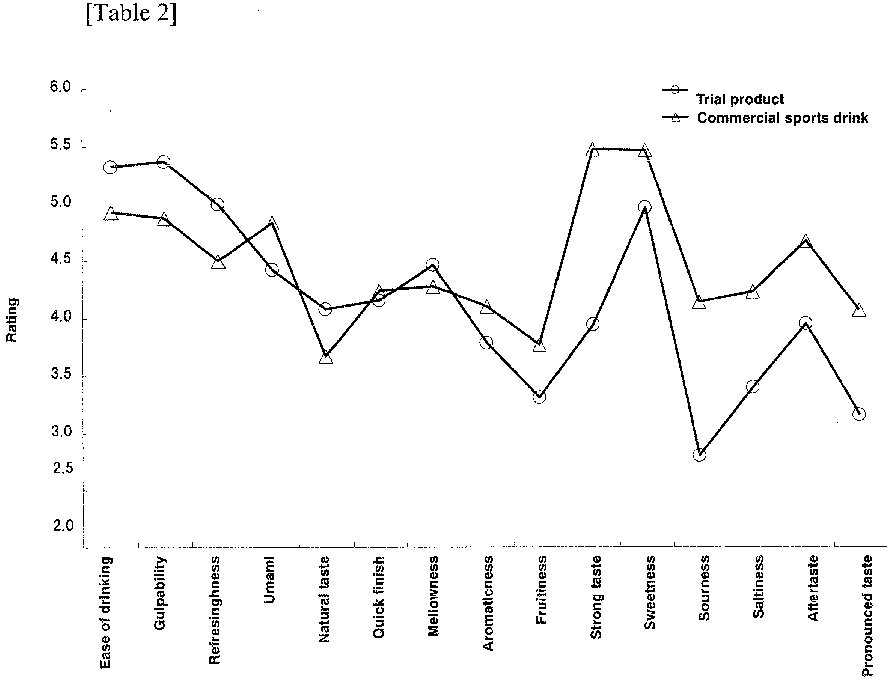

As compared with a commercially available product supplemented with potassium chloride and magnesium chloride as electrolytes in the form of Designated Food Additives having substantially no buffering action, the trial product was found to have reduced sourness, saltiness, aftertaste, and peculiar aftertaste.

### 3. Evaluation of correlation with preferableness

On the basis of the results obtained in Table 2, calculation was made of the correlation coefficients between the respective evaluation items and preferableness of the drink consumed. To be more specific, the respective subjects were asked to rate the preferableness of the trial product and the commercial sports drink as perceived after its consumption on a 7-point scale (7: preferable, 4: cannot be determined definitely, 1: not preferable), and correlations of the preferableness with the ratings of the evaluation items given in Example 1 were calculated using the CORREL function. Correlation coefficients mean that the closer to 1 they are, the more important role the corresponding evaluation items play in preferableness.

The results are shown in Table 3.

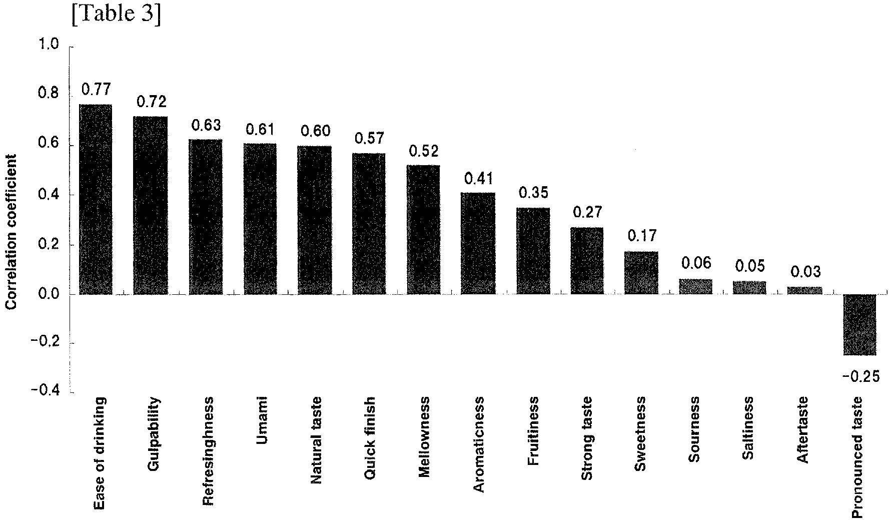

The results show that "ease of drinking" and "gulpability" play an important role in preferableness.

### Test 2: Drink composition prepared using Designated Food Additives having a buffering action

Table 4 shows exemplary recipes of the drink compositions prepared using Designated Food Additives having a buffering action. As compared with Example 2-1, Example 2-2 had grapefruit juice and a sea tangle extract added in smaller amounts, provided that potassium citrate in the form of a Designated Food Additive having a buffering action was added to replace part of the amount of potassium contained in grapefruit juice and the sea tangle extract. Comparative Example 2-1 used potassium chloride in lieu of potassium citrate. All of the prepared drink compositions were confirmed to have a Na⁺ concentration of 40 mg/100 mL, an osmolality of 310 mOsm/kg, a Na⁺:glucose ratio of 1:1, and a Na⁺:K⁺ ratio of 1:0.17.

**[Table 4]**

| Raw material | Example 2-1 | Example 2-2 | Comparative Example 2-1 |
|---|---|---|---|
| Grapefruit juice | 6% | 4% | 4% |
| Lemon juice | 1% | 1% | 1% |
| Fructose | 4% | 4% | 4% |
| Honey | 1% | 1% | 1% |
| Common salt | 0.1% | 0.1% | 0.1% |
| Sea tangle extract | 0.05% | 0.01% | 0.01% |
| Brown sugar syrup | 0.1% | 0.1% | 0.1% |
| Krantz aloe extract | 0.01% | 0.01% | 0.01% |
| Tomato extract | 0.01% | 0.01% | 0.01% |
| Black sesame extract | 0.01% | 0.01% | 0.01% |
| Peel extract | 0.01% | 0.01% | 0.01% |
| Grapefruit flavoring agent | 0.2% | 0.2% | 0.2% |
| Potassium citrate | -- | 0.02% | -- |
| Potassium chloride | -- | -- | 0.015% |

The drinks prepared according to the recipes shown above were subjected to sensory evaluation in terms of the taste peculiar to electrolytes. The sensory evaluation was made by 5 trained panelists, who rated the taste on a 5-point scale (1: the taste peculiar to electrolytes not perceived, 2: rather not perceived, 3: cannot be determined definitely, 4: rather perceived, 5: the taste peculiar to electrolytes perceived).

The results are shown in Table 5.

**[Table 5]**

| | Example 2-1 | Example 2-2 | Comparative Example 2-1 |
|---|---|---|---|
| 1 point | 0 person | 0 person | 0 person |
| 2 points | 4 persons | 0 person | 0 person |
| 3 points | 0 person | 0 person | 0 person |
| 4 points | 1 person | 3 persons | 0 person |
| 5 points | 0 person | 2 persons | 5 persons |
| Average | 2.4 points | 4.4 points | 5.0 points |

### Test 3: Drink compositions having adjusted Ca²⁺ and Mg²⁺ concentrations

The drink compositions were prepared in the relative proportions shown in the table below and were subjected to sensory evaluation.

**[Table 6]**

| Raw material | Trial product 3-1 (low Ca²⁺ & Mg²⁺ levels) | Trial product 3-2 (high Ca²⁺ & Mg²⁺ levels) |
|---|---|---|
| Grapefruit juice | 6% | 6% |
| Lemon juice | 1% | 1% |
| Fructose | 4% | 4% |
| Honey | 0.2% | 0.2% |
| Common salt | 0.1% | 0.1 % |
| Sea tangle extract | 0.05% | 0.05% |
| Brown sugar syrup | 0.04% | 0.04% |
| Krantz aloe extract | 0.01% | 0.01% |
| Tomato extract | 0.01% | 0.01% |
| Black sesame extract | 0.01% | 0.01% |
| Peel extract | 0.01% | 0.01% |
| Grapefruit flavoring agent | 0.2% | 0.2% |
| High-hardness drinking water | -- | 0.25% |

Trial Product 3-1 was prepared using the same recipe as in Example 1. Trial Product 3-2 was prepared by further adding high-hardness drinking water. The prepared drink compositions were confirmed to have the following properties: Trial Product 3-1 (low Ca²⁺ and Mg²⁺ levels) had a Ca²⁺ concentration of 0.5 mg/100 mL and a Mg²⁺ concentration of 0.5 mg/100 mL, and Trial Product 3-2 (high Ca²⁺ and Mg²⁺ levels) had a Ca²⁺ concentration of 1.2 mg/100 mL and a Mg²⁺ concentration of 1.2 mg/100 mL.

The drinks prepared according to the recipes shown above were subjected to sensory evaluation in terms of the taste peculiar to electrolytes. The sensory evaluation was made by 5 trained panelists, who rated the taste on a 5-point scale (1: the taste peculiar to electrolytes not perceived, 2: rather not perceived, 3: cannot be determined definitely, 4: rather perceived, 5: the taste peculiar to electrolytes perceived).

The results are shown in Table 7.

**[Table 7]**

| | Trial product 3-1 (low Ca²⁺ & Mg²⁺ levels) | Trial product 3-2 (high Ca²⁺ & Mg²⁺ levels) |
|---|---|---|
| 1 point | 2 persons | 0 person |
| 2 points | 3 persons | 1 person |
| 3 points | 0 person | 0 person |
| 4 points | 0 person | 4 persons |
| 5 points | 0 person | 0 person |
| Average | 1.6 points | 3.6 points |

### Exemplary recipes

1. Another exemplary recipe using grapefruit juice is shown in Table 8.

**[Table 8]**

| Raw material | Relative proportion |
|---|---|
| Grapefruit juice | 10% |
| Fructose | 4% |
| Honey | 1% |
| Common salt | 0.1% |
| Sea tangle extract | 0.05% |
| Brown sugar syrup | 0.1% |
| Peel extract | 0.01% |
| Grapefruit flavoring agent | 0.2% |

2. An exemplary recipe for the drink composition using peach juice and Japanese apricot juice is shown in Table 9.

**[Table 9]**

| Raw material | Relative proportion |
|---|---|
| Peach juice | 8% |
| Japanese apricot juice | 1% |
| Fructose | 3% |
| Sugar | 1% |
| Maltose | 1% |
| Common salt | 0.15% |
| Wakame extract | 0.05% |
| Krantz aloe extract | 0.01% |
| Maple syrup | 0.05% |
| Peach flavoring agent | 0.2% |

3. An exemplary recipe for the drink composition using grape juice and apple juice is shown in Table 10.

**[Table 10]**

| Raw material | Relative proportion |
|---|---|
| Grape juice | 2% |
| Apple juice | 10% |
| Fructose | 3% |
| Glucose | 0.5% |
| Common salt | 0.1% |
| Sea tangle extract | 0.05% |
| White sesame extract | 0.01% |
| Soft yellow sugar | 0.04% |
| Apple flavoring agent | 0.2% |

4. An exemplary recipes for the drink compositions using pear juice and pineapple juice or kiwi fruit juice are shown in Tables 11 to 13.

**[Table 11]**

| Raw material | Relative proportion |
|---|---|
| Pear juice | 2% |
| Pineapple juice | 6% |
| Fructose | 3% |
| Sugar | 2% |
| Honey | 1% |
| Common salt | 0.2% |
| Ginger extract | 0.05% |
| Wheat germ extract | 0.01% |
| Rice germ extract | 0.01% |
| Pineapple flavoring agent | 0.1% |
| Pear flavoring agent | 0.1% |

**[Table 12]**

| Raw material | Relative proportion |
|---|---|
| Pear juice | 15% |
| Kiwi fruit juice | 2% |
| Fructose | 2% |
| Sugar | 3% |
| Glucose | 1% |
| Honey | 0.2% |
| Common salt | 0.1% |
| Cabbage extract | 0.05% |
| Herb extract | 0.01% |
| Water-soluble dietary fiber | 0.05% |
| Pear flavoring agent | 0.3% |

**[Table 13]**

| Raw material | Relative proportion |
|---|---|
| Pear juice | 6.5% |
| Pineapple juice | 3.5% |
| Kiwi fruit juice | 1.5% |
| Fructose | 3% |
| Glucose | 1% |
| Honey | 0.1% |
| Common salt | 0.15% |
| Kale extract | 0.05% |
| Barley green extract | 0.01% |
| Burnt sugar | 0.02% |
| Pineapple flavoring agent | 0.25% |

## Claims

1. A drink composition having a Na⁺ concentration of 20 to 80 mg/100 mL, an osmolality of 100 to 400 mOsm/kg, a Na⁺:glucose molar ratio of 1:0.1 to 1:10, a Na⁺:K⁺ molar ratio of 1:0.05 to 1:1, a Ca²⁺ concentration of less than 2 mg/100 mL, and a Mg²⁺ concentration of less than 2 mg/100 mL,
wherein the drink composition comprises:
(i) 0.01 to 30% of a fruit juice;
(ii) 0.01 to 10% of a natural sweetener;
(iii) 0.005 to 0.2% of common salt; and
(iv) 0.005 to 1% of a natural umami and kokumi source selected from the group consisting of: algae extract, dried fish extract, mushroom extract, cereal extract, vegetable extract, fruit extract, herbal extract, mesophyll extract, bean extract, nut extract, yeast extract, sap, sugarcane squeeze, brown sugar syrup, sugar, soft yellow sugar, and brown sugar;
wherein the natural sweetener is not replaced by an artificial sweetener;
wherein the drink composition is not supplemented with an electrolyte in the form of a Designated Food Additive having substantially no buffering action, wherein the electrolyte in the form of a Designated Food Additive having substantially no buffering action is potassium chloride, calcium chloride, magnesium chloride or a mixture thereof; and wherein the drink composition is packaged and sterilized.

2. The drink composition according to claim 1, wherein the fruit juice includes a citrus fruit-derived juice.

3. The drink composition according to claim 1 or 2, wherein the drink composition is not supplemented with a Designated Food Additive and/or an Existing Food Additive.

4. A method for preparing a drink composition or for enhancing palatability of a drink composition, said drink composition having a Na⁺ concentration of 20 to 80 mg/100 mL, an osmolality of 100 to 400 mOsm/kg, a Na⁺:glucose molar ratio of 1:0.1 to 1:10, a Na⁺:K⁺ molar ratio of 1:0.05 to 1:1, a Ca²⁺ concentration of less than 2 mg/100 mL, and a Mg²⁺ concentration of less than 2 mg/100 mL, the method comprising a step of mixing the following components to form said drink composition:
(i) 0.01 to 30% of a fruit juice;
(ii) 0.01 to 10% of a natural sweetener;
(iii) 0.005 to 0.2% of common salt; and
(iv) 0.005 to 1% of a natural umami and kokumi source selected from the group consisting of: algae extract, dried fish extract, mushroom extract, cereal extract, vegetable extract, fruit extract, herbal extract, mesophyll extract, bean extract, nut extract, yeast extract, sap, sugarcane squeeze, brown sugar syrup, sugar, soft yellow sugar, and brown sugar;
wherein the natural sweetener is not replaced by an artificial sweetener;
wherein the drink composition is packaged and sterilized; and
wherein the method does not comprise a supplementation with an electrolyte in the form of a Designated Food Additive having substantially no buffering action, wherein the electrolyte in the form of a Designated Food Additive having substantially no buffering action is potassium chloride, calcium chloride, magnesium chloride or a mixture thereof.

5. The method of claim 4, which is a method for preparing a drink composition having a Na⁺ concentration of 20 to 80 mg/100 mL, an osmolality of 100 to 400 mOsm/kg, a Na⁺:glucose molar ratio of 1:0.1 to 1:10, a Na⁺:K⁺ molar ratio of 1:0.05 to 1:1, a Ca²⁺ concentration of less than 2 mg/100 mL, and a Mg²⁺ concentration of less than 2 mg/100 mL, comprising a step of mixing:
(i) 0.01 to 30% of a fruit juice;
(ii) 0.01 to 10% of a natural sweetener;
(iii) 0.005 to 0.2% of common salt; and
(iv) 0.005 to 1% of a natural umami and kokumi source selected from the group consisting of: algae extract, dried fish extract, mushroom extract, cereal extract, vegetable extract, fruit extract, herbal extract, mesophyll extract, bean extract, nut extract, yeast extract, sap, sugarcane squeeze, brown sugar syrup, sugar, soft yellow sugar, and brown sugar;
wherein the natural sweetener is not replaced by an artificial sweetener;
wherein the drink composition is packaged and sterilized; and
wherein the method does not comprise a supplementation with an electrolyte in the form of a Designated Food Additive having substantially no buffering action, wherein the electrolyte in the form of a Designated Food Additive having substantially no buffering action is potassium chloride, calcium chloride, magnesium chloride or a mixture thereof.

6. The method of claim 4, which is a method for enhancing palatability of a drink composition, comprising mixing the following components to form a drink composition having a Na⁺ concentration of 20 to 80 mg/100 mL, an osmolality of 100 to 400 mOsm/kg, a Na⁺:glucose molar ratio of 1:0.1 to 1:10, a Na⁺:K⁺ molar ratio of 1:0.05 to 1:1, a Ca²⁺ concentration of less than 2 mg/100 mL, and a Mg²⁺ concentration of less than 2 mg/100 mL:
(i) 0.01 to 30% of a fruit juice;
(ii) 0.01 to 10% of a natural sweetener;
(iii) 0.005 to 0.2% of common salt; and
(iv) 0.005 to 1% of a natural umami and kokumi source selected from the group consisting of: algae extract, dried fish extract, mushroom extract, cereal extract, vegetable extract, fruit extract, herbal extract, mesophyll extract, bean extract, nut extract, yeast extract, sap, sugarcane squeeze, brown sugar syrup, sugar, soft yellow sugar, and brown sugar;
wherein the natural sweetener is not replaced by an artificial sweetener;
wherein the drink composition is packaged and sterilized; and
wherein the method does not comprise a supplementation with an electrolyte in the form of a Designated Food Additive having substantially no buffering action, wherein the electrolyte in the form of a Designated Food Additive having substantially no buffering action is potassium chloride, calcium chloride, magnesium chloride or a mixture thereof.

7. A method for replenishing human with water and/or electrolyte, comprising a step of orally dosing the drink composition according to any one of claims 1 to 3.

8. The method according to claim 7, comprising dosing the drink composition at 100 mL to 1000 mL/day.

## Patentansprüche

1. Eine Getränkezusammensetzung mit einer Na⁺-Konzentration von 20 bis 80 mg/100 ml, einer Osmolalität von 100 bis 400 mOsm/kg, einem Na⁺:Glucose-Molverhältnis von 1:0,1 bis 1:10, einem Na⁺:K⁺-Molverhältnis von 1:0,05 bis 1:1, einer Ca²⁺-Konzentration von weniger als 2 mg/100 ml und einer Mg²⁺-Konzentration von weniger als 2 mg/100 ml,
wobei die Getränkezusammensetzung umfasst:
(i) 0,01 bis 30% eines Fruchtsafts;
(ii) 0,01 bis 10% eines natürlichen Süßungsmittels;
(iii) 0,005 bis 0,2% Kochsalz; und
(iv) 0,005 bis 1% einer natürlichen Umami- und Kokumi-Quelle, die aus der Gruppe bestehend aus Algenextrakt, Extrakt aus getrocknetem Fisch, Pilzextrakt, Getreideextrakt, Gemüseextrakt, Fruchtextrakt, Kräuterextrakt, Mesophyll-Extrakt, Bohnenextrakt, Nussextrakt, Hefeextrakt, Pflanzensaft, Zuckerrohrsaft, Sirup aus braunem Zucker, Zucker, weichem Gelbzucker und braunem Zucker ausgewählt ist;
wobei das natürliche Süßungsmittel nicht durch ein künstliches Süßungsmittel ersetzt ist;
wobei die Getränkezusammensetzung nicht mit einem Elektrolyt in Form eines Lebensmittelzusatzstoffes (Designated Food Additive), der im Wesentlichen keine Pufferwirkung aufweist, ergänzt ist, wobei der Elektrolyt in Form eines Lebensmittelzusatzstoffes (Designated Food Additive), der im Wesentlichen keine Pufferwirkung aufweist, Kaliumchlorid, Calciumchlorid, Magnesiumchlorid oder ein Gemisch davon ist;
und wobei die Getränkezusammensetzung verpackt und sterilisiert ist.

2. Die Getränkezusammensetzung gemäß Anspruch 1, wobei der Fruchtsaft einen von einer Zitrusfrucht stammenden Saft umfasst.

3. Die Getränkezusammensetzung gemäß Anspruch 1 oder 2, wobei die Getränkezusammensetzung nicht mit einem Lebensmittelzusatzstoff (Designated Food Additive) und/oder einem bestehenden Lebensmittelzusatzstoff (Existing Food Additive) ergänzt ist.

4. Ein Verfahren zur Herstellung einer Getränkezusammensetzung oder zur Verbesserung der Schmackhaftigkeit einer Getränkezusammensetzung, wobei die Getränkezusammensetzung eine Na⁺-Konzentration von 20 bis 80 mg/100 ml, eine Osmolalität von 100 bis 400 mOsm/kg, ein Na⁺:Glucose-Molverhältnis von 1:0,1 bis 1:10, ein Na⁺:K⁺-Molverhältnis von 1:0,05 bis 1:1, eine Ca²⁺-Konzentration von weniger als 2 mg/100 ml und eine Mg²⁺-Konzentration von weniger als 2 mg/100 ml aufweist, wobei das Verfahren einen Schritt des Mischens der nachstehenden Komponenten umfasst, um die Getränkezusammensetzung zu bilden:
(i) 0,01 bis 30% eines Fruchtsafts;
(ii) 0,01 bis 10% eines natürlichen Süßungsmittels;
(iii) 0,005 bis 0,2% Kochsalz; und
(iv) 0,005 bis 1% einer natürlichen Umami- und Kokumi-Quelle, die aus der Gruppe bestehend aus Algenextrakt, Extrakt aus getrocknetem Fisch, Pilzextrakt, Getreideextrakt, Gemüseextrakt, Fruchtextrakt, Kräuterextrakt, Mesophyll-Extrakt, Bohnenextrakt, Nussextrakt, Hefeextrakt, Pflanzensaft, Zuckerrohrsaft, Sirup aus braunem Zucker, Zucker, weichem Gelbzucker und braunem Zucker ausgewählt ist;
wobei das natürliche Süßungsmittel nicht durch ein künstliches Süßungsmittel ersetzt ist;
wobei die Getränkezusammensetzung verpackt und sterilisiert ist; und
wobei das Verfahren nicht eine Ergänzung mit einem Elektrolyt in Form eines Lebensmittelzusatzstoffes (Designated Food Additive), der im Wesentlichen keine Pufferwirkung aufweist, umfasst, wobei der Elektrolyt in Form eines Lebensmittelzusatzstoffes (Designated Food Additive), der im Wesentlichen keine Pufferwirkung aufweist, Kaliumchlorid, Calciumchlorid, Magnesiumchlorid oder ein Gemisch davon ist.

5. Das Verfahren gemäß Anspruch 4, das ein Verfahren zur Herstellung einer Getränkezusammensetzung mit einer Na⁺-Konzentration von 20 bis 80 mg/100 ml, einer Osmolalität von 100 bis 400 mOsm/kg, einem Na⁺:Glucose-Molverhältnis von 1:0,1 bis 1:10, einem Na⁺:K⁺-Molverhältnis von 1:0,05 bis 1:1, einer Ca²⁺-Konzentration von weniger als 2 mg/100 ml und einer Mg²⁺-Konzentration von weniger als 2 mg/100 ml ist, umfassend einen Schritt des Mischens:
(i) 0,01 bis 30% eines Fruchtsafts;
(ii) 0,01 bis 10% eines natürlichen Süßungsmittels;
(iii) 0,005 bis 0,2% Kochsalz; und
(iv) 0,005 bis 1% einer natürlichen Umami- und Kokumi-Quelle, die aus der Gruppe bestehend aus Algenextrakt, Extrakt aus getrocknetem Fisch, Pilzextrakt, Getreideextrakt, Gemüseextrakt, Fruchtextrakt, Kräuterextrakt, Mesophyll-Extrakt, Bohnenextrakt, Nussextrakt, Hefeextrakt, Pflanzensaft, Zuckerrohrsaft, Sirup aus braunem Zucker, Zucker, weichem Gelbzucker und braunem Zucker ausgewählt ist;
wobei das natürliche Süßungsmittel nicht durch ein künstliches Süßungsmittel ersetzt ist;
wobei die Getränkezusammensetzung verpackt und sterilisiert ist; und
wobei das Verfahren nicht eine Ergänzung mit einem Elektrolyt in Form eines Lebensmittelzusatzstoffes (Designated Food Additive), der im Wesentlichen keine Pufferwirkung aufweist, umfasst, wobei der Elektrolyt in Form eines Lebensmittelzusatzstoffes (Designated Food Additive), der im Wesentlichen keine Pufferwirkung aufweist, Kaliumchlorid, Calciumchlorid, Magnesiumchlorid oder ein Gemisch davon ist.

6. Das Verfahren gemäß Anspruch 4, das ein Verfahren zur Verbesserung der Schmackhaftigkeit einer Getränkezusammensetzung ist, umfassend das Mischen der nachstehenden Komponenten, um eine Getränkezusammensetzung mit einer Na⁺-Konzentration von 20 bis 80 mg/100 ml, einer Osmolalität von 100 bis 400 mOsm/kg, einem Na⁺:Glucose-Molverhältnis von 1:0,1 bis 1:10, einem Na⁺:K⁺-Molverhältnis von 1:0,05 bis 1:1, einer Ca²⁺-Konzentration von weniger als 2 mg/100 ml und einer Mg²⁺-Konzentration von weniger als 2 mg/100 ml zu bilden:
(i) 0,01 bis 30% eines Fruchtsafts;
(ii) 0,01 bis 10% eines natürlichen Süßungsmittels;
(iii) 0,005 bis 0,2% Kochsalz; und
(iv) 0,005 bis 1% einer natürlichen Umami- und Kokumi-Quelle, die aus der Gruppe bestehend aus Algenextrakt, Extrakt aus getrocknetem Fisch, Pilzextrakt, Getreideextrakt, Gemüseextrakt, Fruchtextrakt, Kräuterextrakt, Mesophyll-Extrakt, Bohnenextrakt, Nussextrakt, Hefeextrakt, Pflanzensaft, Zuckerrohrsaft, Sirup aus braunem Zucker, Zucker, weichem Gelbzucker und braunem Zucker ausgewählt ist;
wobei das natürliche Süßungsmittel nicht durch ein künstliches Süßungsmittel ersetzt ist;
wobei die Getränkezusammensetzung verpackt und sterilisiert ist; und
wobei das Verfahren nicht eine Ergänzung mit einem Elektrolyt in Form eines Lebensmittelzusatzstoffes (Designated Food Additive), der im Wesentlichen keine Pufferwirkung aufweist, umfasst, wobei der Elektrolyt in Form eines Lebensmittelzusatzstoffes (Designated Food Additive), der im Wesentlichen keine Pufferwirkung aufweist, Kaliumchlorid, Calciumchlorid, Magnesiumchlorid oder ein Gemisch davon ist.

7. Ein Verfahren, um einem Menschen Wasser und/oder Elektrolyt zuzuführen, umfassend einen Schritt der oralen Dosierung der Getränkezusammensetzung gemäß einem der Ansprüche 1 bis 3.

8. Das Verfahren gemäß Anspruch 7, umfassend das Dosieren der Getränkezusammensetzung auf 100 ml bis 1000 ml/Tag.

## Revendications

1. Composition pour boisson ayant une concentration en Na⁺ de 20 à 80 mg/100 ml, une osmolalité de 100 à 400 mOsm/kg, un rapport molaire de Na⁺:glucose de 1:0,1 à 1:10, un rapport molaire de Na⁺:K⁺ de 1:0,05 à 1:1, une concentration en Ca²⁺ inférieure à 2 mg/100 ml et une concentration en Mg²⁺ inférieure à 2 mg/100 ml,
dans laquelle la composition pour boisson comprend:
(i) de 0,01 à 30 % d'un jus de fruit;
(ii) de 0,01 à 10 % d'un édulcorant naturel;
(iii) de 0,005 à 0,2 % d'un sel courant; et
(iv) de 0,005 à 1 % d'une source naturelle d'umami et kokumi choisie dans le groupe constitué par un extrait d'algue, un extrait de poisson séché, un extrait de champignon, un extrait de céréale, un extrait de légume, un extrait de fruit, un extrait d'herbe, un extrait de mésophylle, un extrait de haricot, un extrait de noix, un extrait de levure, de la sève, de la canne à sucre broyée, un sirop de sucre roux, du sucre, du sucre jaune mou et du sucre roux;
dans laquelle l'édulcorant naturel n'est pas remplacé par un édulcorant artificiel;
dans laquelle la composition pour boisson n'est pas complétée avec un électrolyte sous la forme d'un additif alimentaire reconnu (Designated Food Additive) n'ayant sensiblement pas d'action tampon, dans laquelle l'électrolyte sous la forme d'un additif alimentaire désigné (Designated Food Additive) n'ayant sensiblement pas d'action tampon est le chlorure de potassium, le chlorure de calcium, le chlorure de magnésium ou un mélange de ceux-ci;
et dans laquelle la composition pour boisson est conditionnée et stérilisée.

2. Composition pour boisson selon la revendication 1, dans laquelle le jus de fruit comprend un jus dérivé d'un agrume.

3. Composition pour boisson selon la revendication 1 ou 2, la composition pour boisson n'étant pas complétée avec un additif alimentaire désigné et/ou un additif alimentaire existant (Existing Food Additive).

4. Procédé de préparation d'une composition pour boisson ou d'amélioration de la palatabilité d'une composition pour boisson, ladite composition pour boisson ayant une concentration en Na⁺ de 20 à 80 mg/100 ml, une osmolalité de 100 à 400 mOsm/kg, un rapport molaire de Na⁺:glucose de 1:0,1 à 1:10, un rapport molaire de Na⁺:K⁺ de 1:0,05 à 1:1, une concentration en Ca²⁺ inférieure à 2 mg/100 ml et une concentration en Mg²⁺ inférieure à 2 mg/100 ml, le procédé comprenant une étape de mélange des composants suivants pour former ladite composition pour boisson:
(i) de 0,01 à 30 % d'un jus de fruit;
(ii) de 0,01 à 10 % d'un édulcorant naturel;
(iii) de 0,005 à 0,2 % d'un sel courant; et
(iv) de 0,005 à 1 % d'une source naturelle d'umami et kokumi choisie dans le groupe constitué par un extrait d'algue, un extrait de poisson séché, un extrait de champignon, un extrait de céréale, un extrait de légume, un extrait de fruit, un extrait d'herbe, un extrait de mésophylle, un extrait de haricot, un extrait de noix, un extrait de levure, de la sève, de la canne à sucre broyée, un sirop de sucre roux, du sucre, du sucre jaune mou et du sucre roux;
dans lequel l'édulcorant naturel n'est pas remplacé par un édulcorant artificiel;
dans lequel la composition pour boisson est conditionnée et stérilisée; et
dans lequel le procédé ne comprend pas de complément avec un électrolyte sous la forme d'un additif alimentaire désigné (Designated Food Additive) n'ayant sensiblement pas d'action tampon, dans lequel l'électrolyte sous la forme d'un additif alimentaire désigné (Designated Food Additive) n'ayant sensiblement pas d'action tampon est le chlorure de potassium, le chlorure de calcium, le chlorure de magnésium ou un mélange de ceux-ci.

5. Procédé selon la revendication 4, qui est un procédé de préparation d'une composition pour boisson ayant une concentration en Na⁺ de 20 à 80 mg/100 ml, une osmolalité de 100 à 400 mOsm/kg, un rapport molaire de Na⁺:glucose de 1:0,1 à 1:10, un rapport molaire de Na⁺:K⁺ de 1:0,05 à 1:1, une concentration en Ca²⁺ inférieure à 2 mg/100 ml et une concentration en Mg²⁺ inférieure à 2 mg/100 ml, comprenant une étape de mélange:
(i) de 0,01 à 30 % d'un jus de fruit;
(ii) de 0,01 à 10 % d'un édulcorant naturel;
(iii) de 0,005 à 0,2 % d'un sel courant; et
(iv) de 0,005 à 1 % d'une source naturelle d'umami et kokumi choisie dans le groupe constitué par un extrait d'algue, un extrait de poisson séché, un extrait de champignon, un extrait de céréale, un extrait de légume, un extrait de fruit, un extrait d'herbe, un extrait de mésophylle, un extrait de haricot, un extrait de noix, un extrait de levure, de la sève, de la canne à sucre broyée, un sirop de sucre roux, du sucre, du sucre jaune mou et du sucre roux;
dans lequel l'édulcorant naturel n'est pas remplacé par un édulcorant artificiel;
dans lequel la composition pour boisson est conditionnée et stérilisée; et
dans lequel le procédé ne comprend pas de complément avec un électrolyte sous la forme d'un additif alimentaire désigné (Designated Food Additive) n'ayant sensiblement pas d'action tampon, dans lequel l'électrolyte sous la forme d'un additif alimentaire désigné (Designated Food Additive) n'ayant sensiblement pas d'action tampon est le chlorure de potassium, le chlorure de calcium, le chlorure de magnésium ou un mélange de ceux-ci.

6. Procédé selon la revendication 4, qui est un procédé d'amélioration de la palatabilité d'une composition pour boisson comprenant le mélange des composants suivants pour former une composition pour boisson ayant une concentration en Na⁺ de 20 à 80 mg/100 ml, une osmolalité de 100 à 400 mOsm/kg, un rapport molaire de Na⁺:glucose de 1:0,1 à 1:10, un rapport molaire de Na⁺:K⁺ de 1:0,05 à 1:1, une concentration en Ca²⁺ inférieure à 2 mg/100 ml et une concentration en Mg²⁺ inférieure à 2 mg/100 ml:
(i) de 0,01 à 30 % d'un jus de fruit;
(ii) de 0,01 à 10 % d'un édulcorant naturel;
(iii) de 0,005 à 0,2 % d'un sel courant; et
(iv) de 0,005 à 1 % d'une source naturelle d'umami et kokumi choisie dans le groupe constitué par un extrait d'algue, un extrait de poisson séché, un extrait de champignon, un extrait de céréale, un extrait de légume, un extrait de fruit, un extrait d'herbe, un extrait de mésophylle, un extrait de haricot, un extrait de noix, un extrait de levure, de la sève, de la canne à sucre broyée, un sirop de sucre roux, du sucre, du sucre jaune mou et du sucre roux;
dans lequel l'édulcorant naturel n'est pas remplacé par un édulcorant artificiel;
dans lequel la composition pour boisson est conditionnée et stérilisée; et
dans lequel le procédé ne comprend pas de complément avec un électrolyte sous la forme d'un additif alimentaire désigné (Designated Food Additive) n'ayant sensiblement pas d'action tampon, dans lequel l'électrolyte sous la forme d'un additif alimentaire désigné (Designated Food Additive) n'ayant sensiblement pas d'action tampon est le chlorure de potassium, le chlorure de calcium, le chlorure de magnésium ou un mélange de ceux-ci.

7. Procédé de réapprovisionnement d'un être humain en eau et/ou électrolyte, comprenant une étape de dosage par voie orale de la composition pour boisson selon l'une quelconque des revendications 1 à 3.

8. Procédé selon la revendication 7, comprenant le dosage de la composition pour boisson à 100 ml à 1 000 ml/jour.
